# EUROPEAN PATENT SPECIFICATION

(11) **EP 4 448 992 B1**
(45) Date of publication and mention of the grant of the patent: **20.05.2026**
(21) Application number: 21843601.2
(22) Date of filing: 17.12.2021
(51) Int. Cl.: F16K 1/54, F02M 21/02

(54) **A FUEL GAS INJECTION ARRANGEMENT AND A HYDROGEN INTERNAL COMBUSTION ENGINE**
BRENNGASEINSPRITZANORDNUNG UND WASSERSTOFFVERBRENNUNGSMOTOR
AGENCEMENT D'INJECTION DE GAZ COMBUSTIBLE ET MOTEUR À COMBUSTION INTERNE À HYDROGÈNE

(43) Date of publication of application: 23.10.2024
(73) Proprietor: VOLVO TRUCK CORPORATION, 405 08 Göteborg (SE)
(72) Inventor: EISMARK, Jan, 414 72 GÖTEBORG (SE); SIMONSSON, Tommy, 444 47 STENUNGSUND (SE); EHLESKOG, Rickard, 422 47 HISINGS BACKA (SE); HINDI, Gustavo, 445 57 SURTE (SE)
(74) Representative: Kransell & Wennborg KB
(86) International application number: PCT/EP2021/086547
(87) International publication number: WO 2023/110129

(56) References cited:
- WO-A1-2004/106728
- DE-A1- 102004 044 820
- US-A1- 2005 082 393
- US-A1- 2017 321 636
- US-B2- 10 260 450

## Description

### TECHNICAL FIELD

The present disclosure relates to a fuel gas injection arrangement operable in a hydrogen internal combustion engine. The present disclosure also relates to a corresponding fuel gas injection arrangement, to a hydrogen internal combustion engine, and to a vehicle. Although the disclosure will be described in relation to a vehicle in the form of a truck, the disclosure can also be efficiently incorporated in other vehicles types such as e.g. buses and construction equipment, as well as for marine applications, genset applications, and cars.

### BACKGROUND

A fuel gas injection arrangement for a hydrogen internal combustion engine may typically be operable at critical conditions at which the hydrogen flow becomes sonic or even locally supersonic. One problem with this type of fuel flow is difficulties to maintain the initial direction of the jet out of the injector nozzle.

One commonly used hydrogen nozzle for injecting hydrogen into a combustion chamber is a so called pintle-valve nozzle. In this type of nozzles, an angle of the upper part of the pintle valve surface is a design-parameter which may determine the outgoing direction of the jet. In order to further control the outgoing direction of the jet, a pintle-valve can be combined with a nozzle cap. The nozzle cap may generally comprise one or several holes and the configuration of the holes may often be used to determine the direction of the outgoing jet.

A particular problem with a hydrogen nozzle is that the nozzle cap hole exit area needs to be larger than conventional nozzles for internal combustion engines operable on liquid fluids, such as diesel fuel. This means that a major part of the nozzle cap side and bottom sides are open holes. It may therefore be difficult to design the holes to direct the jets in a wanted direction, especially at sonic or even locally supersonic hydrogen flow. Further, this may lead to disturbing vortices in the cap volume. Such disturbing vortices may re-direct part of the flow in an unfavourable direction. Furthermore, the cap-volume as such may contain residual hydrogen-containing gases that may auto-ignite at an unfavourable timing.

Accordingly, there is room for improvements with regards to fuel gas flow guidance in nozzles for internal combustion engine systems, in particular for internal combustion engine systems operable on a fuel gaseous medium such as hydrogen. Fuel gas injection arrangements are known from WO 2004/106728 A1, US 2005/082393 A1 and US 2017/321636 A1.

### SUMMARY

An object of the disclosure is to provide an improved fuel gas injection arrangement of an internal combustion engine, in which streams of fuel gas through the injection arrangement can be guided more efficiently and subsequently exit the nozzle cap in a controlled manner. According to a first aspect of the disclosure, the object is achieved by a nozzle cap according to claim 1. The object is also achieved by the other independent claims. The dependent claims are directed to advantageous embodiments of the disclosure.

According to the first aspect of the disclosure, there is provided a fuel gas injection arrangement for directly injecting a gaseous fuel into a combustion chamber of an internal combustion engine. The fuel gas injection arrangement extends in an axial direction and comprises a nozzle cap having a body part with an inner circumferential side at least partly defining an inner volume. The nozzle cap also comprises an inlet for receiving gaseous fuel and at least one outlet arranged at an axial end portion of the nozzle cap.

Moreover, the fuel gas injection arrangement comprises an inlet valve arrangement at least partly accommodated in the body part. The inlet valve arrangement is movable between a closed position in which a portion of the inlet valve arrangement is arranged in abutment with a valve seat of the nozzle cap to prevent gaseous fuel from entering the inlet, and an open position in which the gaseous fuel is allowed to flow between the inlet and the at least one outlet.

The nozzle cap further comprises a flow-guiding portion disposed on the inner circumferential side and the inlet valve arrangement comprises a corresponding protruding flow-guiding portion protruding radially towards the inner circumferential side.

In addition, the nozzle cap flow-guiding portion and the valve protruding flow-guiding portion are configured to cooperate to redirect gaseous fuel received from the inlet towards the at least one outlet such that gaseous fuel jets exiting the at least one outlet converge towards a geometrical intersection-axial centre region. The geometrical intersection-axial centre region is located downstream and axially distanced from the at least one outlet.

The proposed fuel gas injection arrangement is at least partly based on the insight that its internal geometries in combination with the design of the nozzle cap downstream portion can be modified to control the efficiency of the combustion of the fuel gas within the cylinder of the internal combustion engine.

By the provision of the flow-guiding portion disposed on the nozzle cap inner circumferential side and the corresponding protruding flow-guiding portion on the inlet valve arrangement, it becomes possible to guide the flow of gaseous fuel in a more controlled manner. Hereby, the internal flow guiding portions of the nozzle cap and valve collectively contribute to a converging effect of fuel gas streams exiting the at least one outlet.

Furthermore, by improving the control of the fuel gas flow, it becomes possible to further enhance the functions of other components of the internal combustion engine, such as e.g. the shape of a piston bowl for a piston reciprocating in the internal combustion engine. The shape of such piston bowl is highly dependent on the direction of the fuel gas exiting the at least one outlet of the nozzle cap.

In particular, by the configuration of the nozzle cap flow-guiding portion and the valve protruding flow-guiding portion as defined above, the gaseous fuel jets exiting the at least one outlet converge such that the fuel jets will converge towards a centre when entering the combustion chamber and may subsequently collapse in the combustion chamber. To this end, the shape of the valve, the inner side of the nozzle cap and the outlet provides flow-guiding surfaces which are directing the flow of fuel gas to converge towards the centre region. A converging flow of hydrogen gas promotes a distinct flow direction.

As such, the proposed fuel gas injection arrangement facilitates the interplay between the injector configuration, ambient conditions, and combustion. Accordingly, by improved control of the outgoing fuel flow from the nozzle cap, the mixing of fuel and air is improved, which generally occurs during the compression stroke. In addition, the improved mixing generally provides for improved ignition and combustion events.

As used herein, the term "intersection-axial centre region" refers to a region where flow vectors from gaseous fuel jets exiting from different positions from the nozzle cap intersect. In other words, the gaseous fuel jets exiting from different positions from the nozzle cap converge towards each other so as to ultimately intersect at the intersection-axial centre region. Similarly, the term "intersection-point", as used herein, refers to a point along an axial centre line extending through the geometrical impingement-axial centre region where flow vectors from gaseous fuel jets exiting from different positions from the nozzle cap intersect. In other words, the gaseous fuel jets exiting from different positions from the nozzle cap converge towards each other so as to ultimately intersect at the intersection-point of the intersection-axial centre region.

Typically, although not strictly required, a location of the intersection-axial centre region in the axial direction may be defined by a distance, as measured from a cross-sectional plane radially through the at least one outlet, and a converging angle, being defined as the angle between the cross-sectional plane and a gaseous fuel jet exiting the at least one outlet.

The converging angle may preferably be about between 5 degrees and 60 degrees. Still preferably, the converging angle may be about between 10 degrees and 40 degrees. Still preferably, the converging angle may be about between 15 degrees and 25 degrees.

The distance, as mentioned, above may essentially correspond to the mean diameter of an outlet region defined by the at least one outlet.

The nozzle cap flow-guiding portion may comprise a circumferential concave portion extending a substantial part in an axial direction.

By way of example, at least a part of the nozzle cap flow-guiding portion extends in the axial direction to the at least one outlet.

Typically, the axial end portion of the nozzle cap may comprise an edge defining the at least one outlet.

The at least one outlet may either comprise one outlet region or a number of outlet regions, as will be described in the following. An advantage with several outlet regions is that the flow entering the combustion chamber can be split into a plurality of separate flows, whereby the control of the fuel gas flow into the combustion chamber may be further improved.

According to one example embodiment, the at least one outlet is a single circular ringformed cap exit. In other words, the outlet is a single circular exit extending 360 degrees about axial centre. By way of example, the at least one outlet is a single-orifice extending circumferentially around an end portion of the valve arrangement, whereby at least one or more gaseous fuel jets exiting the single-orifice converge at an intersection-point along an axial centre line extending through the geometrical intersection-axial centre region.

Alternatively, the at least one outlet comprises a plurality of outlet regions circumferentially arranged around an axial centre line. The plurality of outlet regions may be uniformly distributed around the axial centre line. The plurality of outlet regions may be non-uniformly distributed around the axial centre line. The plurality of outlet regions may be of the same geometrical size. The plurality of outlet regions may be of different geometrical sizes.

Typically, at least some of the gaseous fuel jets exiting from the plurality of outlet regions may converge at a common intersection-point along an axial centre line extending through the geometrical intersection-axial centre region.

Typically, at least some of the gaseous fuel jets exiting from the plurality of outlet regions may individually converge towards the geometrical intersection-axial centre region and at different axial distances from the at least one outlet region.

The protruding flow-guiding portion may be disposed on an envelope surface of the valve arrangement.

The protruding flow-guiding portion may be a convex outer portion extending a substantial part in an axial direction.

Typically, parts of the nozzle cap flow-guiding portion and the protruding flow-guiding portion may be arranged radially opposite each other.

The inlet valve arrangement may comprise a valve portion and an axially extending head portion having an upper end arranged at the valve portion, and a lower end facing away from the valve portion, wherein the valve portion may comprise a surface arranged in abutment with the valve seat when the inlet valve arrangement assumes the closed position.

The valve portion and the head portion may be integrally formed with each other.

The protruding flow-guiding portion may form part of the head portion.

The head portion may comprise a taper shaped surface between the protruding flow-guiding portion and the lower end.

Typically, a diameter of the head portion may decrease along the taper shaped surface in a direction from the protruding flow-guiding portion to the lower end.

The nozzle cap may be an outer part of the fuel gas injection arrangement. The nozzle cap may be configured to attach to an injector body of the fuel gas injection arrangement. In addition, the nozzle cap may be a downstream part of the fuel gas injection arrangement.

The inlet valve arrangeable in the inlet of the nozzle cap may for example be a pintle valve that are per se known in the art, although other types or valves are conceivable.

The at least one outlet is configured to permit discharge of one or more gas jets of fuel into a combustion chamber of the internal combustion engine. By way of example, the outlet of the nozzle cap directs the hydrogen stream into, or towards a combustion chamber of the hydrogen internal combustion engine.

The fuel gas injection arrangement may be a hydrogen fuel gas injection arrangement. In particular, the proposed fuel gas injection arrangement is suitable for spark-ignited internal combustion engines, utilizing hydrogen direct injection so as to achieve high engine power output and efficiency with low emissions. One of the many advantages of using hydrogen in ICE as a clean alternative fuel is its zero-carbon content. This means that carbon-based emissions, mainly CO, CO2 and soot, can be eliminated. Thus, by the herein proposed fuel gas injection arrangement, the hydrogen stream is guided towards the outlet such that hydrogen injection for the hydrogen internal combustion engine can be efficiently performed.

A portion of the valve arrangement may be arranged in abutment with the at least one radial protrusion when the valve arrangement assumes the open position. By providing the valve arrangement in close proximity with the at least one radial protrusion, the flow of hydrogen is directed to the outlet exit(s) formed by the at least one radial protrusion.

The fuel gas injection arrangement may comprise a control unit configured to control the operation of the fuel gas injection arrangement.

The fuel gas injection arrangement may be controllable by the control unit to inject fuel into a combustion chamber with a low injection pressure of between 15 to 60 bar, preferably with a low injection pressure of between 15 to 30 bar. The fuel injection arrangement may thus generally be used in low medium pressure hydrogen implementations (below 60 bar).

According to a non-limiting example, the fuel injection arrangement can suitably be used for an increased hydrogen flow pressure of approximately 60 bar. The fuel injection arrangement can hence be used in so-called medium pressure hydrogen implementations. The fuel injection arrangement may also be used in high pressure hydrogen implementations.

The control unit may be configured to control the fuel gas injection arrangement in response to a control signal containing data being indicative of a hydrogen system pressure, a number of injections per engine cycle, a timing for start of each injection, a duration of each injection, a separation time between injections.

According to a second aspect of the disclosure, there is provided a hydrogen internal combustion engine comprising a fuel gas injection arrangement according to the first aspect.

According to a third aspect of the disclosure, there is provided a vehicle comprising a fuel gas injection arrangement according to the first aspect and/or a hydrogen internal combustion engine according to the second aspect. Effects and features of the third aspect are largely analogous to those described above in relation to the first aspect and the second aspect.

Further advantages and advantageous features of the disclosure are disclosed in the following description and in the dependent claims. It should also be readily appreciated that different features may be combined to create embodiments other than those described in the following, without departing from the scope of the present disclosure.

The terminology used herein is for the purpose of describing particular examples only and is not intended to be limiting of the disclosure. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof. As used herein, the terms "first", "second", and "third" may be used interchangeably to distinguish one component from another and are not intended to signify location or importance of the individual components.

Unless otherwise defined, all terms (including technical and scientific terms) used herein have the same meaning as commonly understood by one of ordinary skill in the art to which this disclosure belongs. It will be further understood that terms used herein should be interpreted as having a meaning that is consistent with their meaning in the context of this specification and the relevant art and will not be interpreted in an idealized or overly formal sense unless expressly so defined herein.

### BRIEF DESCRIPTION OF THE DRAWINGS

The above, as well as additional objects, features and advantages of the present disclosure, will be better understood through the following illustrative and non-limiting detailed description of exemplary embodiments of the present disclosure, wherein:
Fig. 1 is a vehicle in the form a truck according to example embodiments of the disclosure;
Fig. 2 is a perspective cross-sectional view of parts of a hydrogen internal combustion engine comprising a fuel gas injection arrangement according to example embodiments of the disclosure;
Fig. 3 is a perspective cross-sectional view of the fuel gas injection arrangement in Fig. 2 according to example embodiments of the disclosure;
Figs. 4A and 4B are cross-sectional side-views of a nozzle cap and a valve of the fuel gas injection arrangement illustrated in Fig. 3 and along the line A-A, according to example embodiments of the disclosure; and
Figs. 5A to 5C conceptually illustrate different types of axial end portions of a nozzle cap for the fuel gas injection arrangement in Fig. 3, according to example embodiments of the disclosure.

### DETAILED DESCRIPTION OF EXAMPLE EMBODIMENTS

The present disclosure will now be described more fully hereinafter with reference to the accompanying drawings, in which an exemplary embodiment of the disclosure is shown. The disclosure may, however, be embodied in many different forms and should not be construed as limited to the embodiment set forth herein; rather, the embodiment is provided for thoroughness and completeness. Like reference character refer to like elements throughout the description.

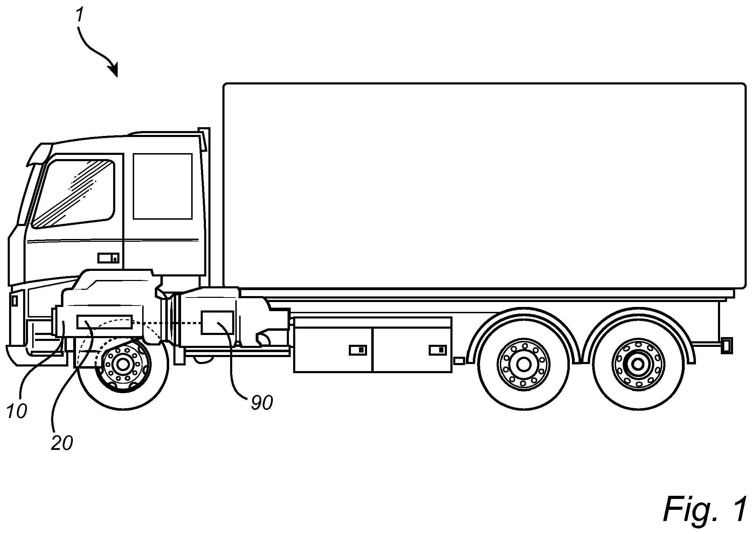

With particular reference to Fig. 1, there is provided a vehicle 1 in the form of a truck. The vehicle 1 comprises an internal combustion engine, ICE, system 10 for powering and driving the vehicle 1. The ICE system 10 in Fig. 1 also comprises an ICE 20. In this example, the ICE system 10 is a hydrogen piston ICE system. The combustion in such hydrogen ICE system is based on a combustion of air and hydrogen, as is commonly known in the art. While the combustion of hydrogen with oxygen may only produce water as its only product in a pure combustion process between hydrogen and oxygen, a hydrogen ICE system based on combustion of air and hydrogen generally produce water, heat and NOx, as is commonly known in the art. In addition, hydrogen can be combusted in an internal combustion engine over a wide range of fuel-air mixtures. A hydrogen ICE system may be operated to produce very low emissions during certain conditions. The hydrogen ICE system may generally operate based on hydrogen in gaseous form, while the hydrogen can be stored in liquid or gaseous form in the vehicle by a suitable hydrogen gas tank.

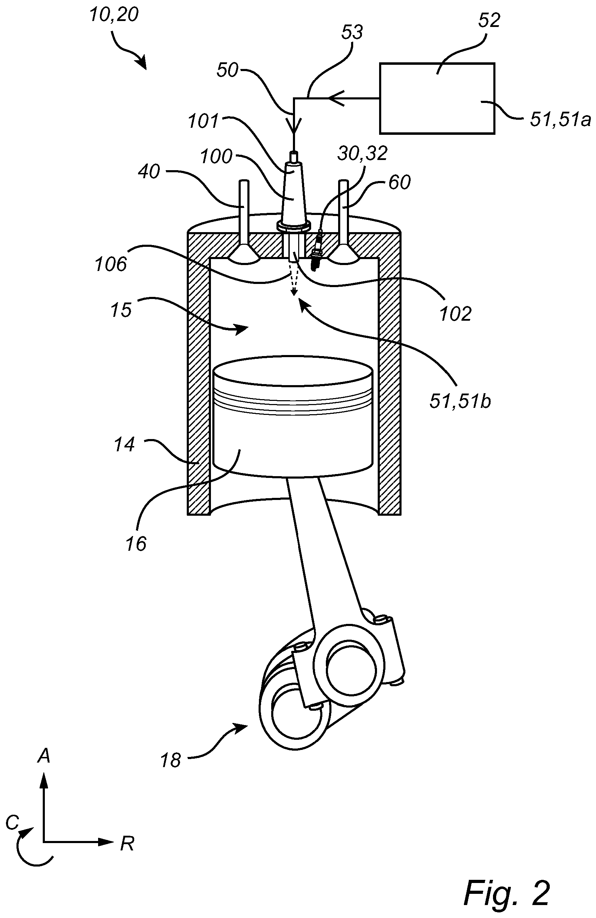

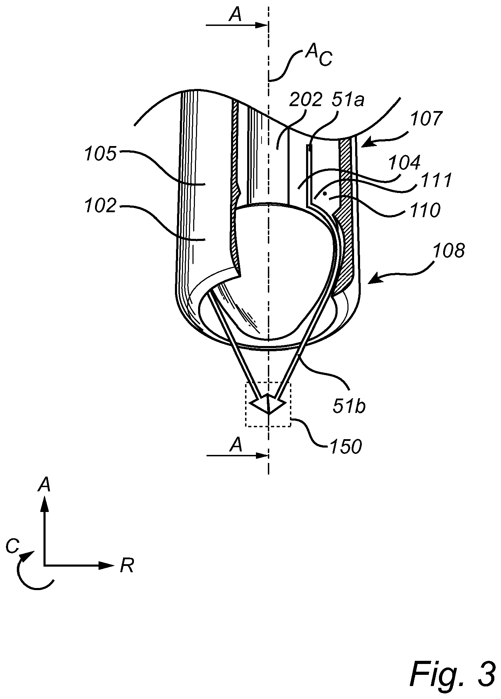

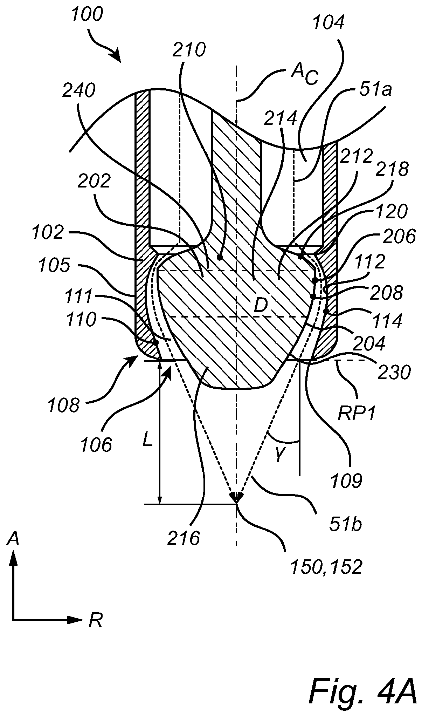

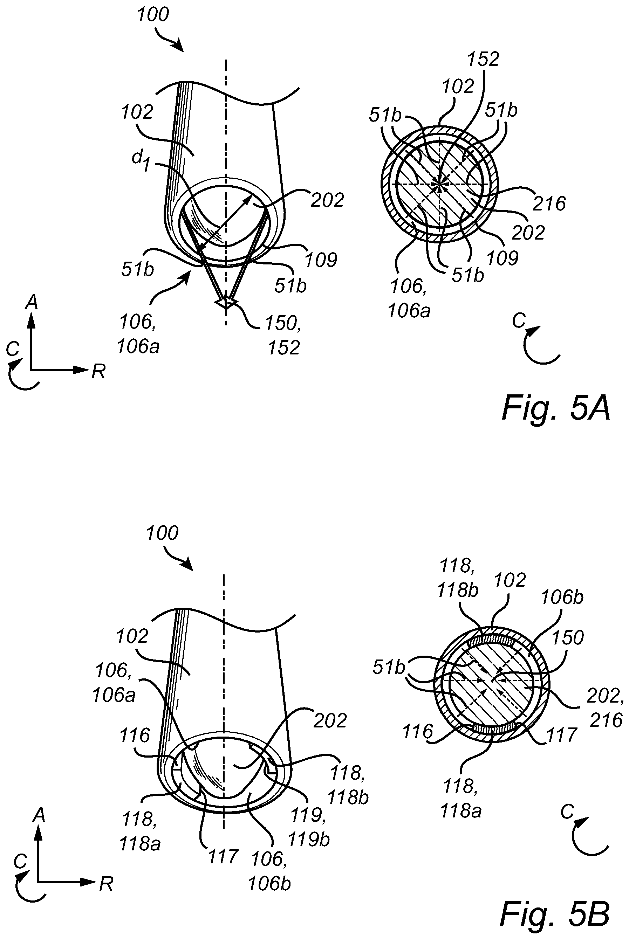

The truck 1 may be a hybrid electric vehicle. By way of example, the hybrid electric vehicle comprises an electric propulsion system having at least one high-voltage battery and at least one electric machine, and further the hydrogen ICE system 10. The hydrogen ICE 20 of the truck 1 further comprises a fuel gas injection arrangement with a nozzle cap as disclosed herein, e.g. in Figs. 2 and 3, and further in Figs. 4A to 4B and 5A to 5C. By way of example, the fuel gas injection arrangement is a fuel gas injection arrangement configured to directly inject hydrogen gas fuel into a combustion chamber 15 of the ICE 20, as may be gleaned from Fig. 2.

As depicted in Fig. 1, the ICE system 10 further comprises a control unit 90. The control unit 90 is arranged in communication with the components of the ICE system 10, in particular the fuel gas injection arrangement 100. As will be further described herein, the control unit 90 is configured to control the fuel gas injection arrangement 100. The control unit 90 is here an integral part of the electronic control unit of the vehicle. The control unit 90 may also be a separate part of the vehicle 1 and communicate with the main electronic control unit for controlling the vehicle and various parts of the vehicle.

Turning now to Figure 2, there is depicted one example embodiment of the ICE system 10 for incorporation in the vehicle 1 as described above in relation to Fig 1. In particular, Fig. 2 is a perspective cross-sectional view of parts of a hydrogen ICE comprising a fuel gas injection arrangement 100 according to example embodiments of the disclosure. The fuel gas injection arrangement 100 is a fuel gas nozzle injection arrangement having a nozzle cap and an inlet valve arrangement, as will be further described in relation to Figs. 3, 4A to 4B and 5A to 5C. The fuel gas injection arrangement 100 here also comprises an injector body 101, as illustrated in Fig. 2.

Fig. 2 only depicts a single cylinder 14 having a combustion chamber 15 and a reciprocating piston 16 arranged therein. The piston 16 may typically comprise a piston crown with a piston bowl (not shown) facing the injector 100. In such a case, the flow of hydrogen is directed towards the piston bowl. Although Fig. 2 depicts a single cylinder, the ICE 20 generally comprises a plurality of cylinders 14 operated to combust fuel 51, such as hydrogen gas, whereby the motion of pistons 16 reciprocating in the cylinders 14 is transmitted to a rotational movement of a crank shaft 18. The crank shaft 18 is further coupled to a transmission (not shown) for providing a torque to driving elements (not shown). In case of a heavy-duty vehicle, such as a truck, the driving elements are wheels; however, the ICE 20 may also be used for other equipment such as construction equipment, marine applications, etc.

Generally, each cylinder 14 is provided with a corresponding piston 16 connected to the crankshaft 18 of the ICE 20. The ICE system 10 further comprises an intake manifold (not shown) forming intake guides arranged to guide air to the cylinders 14, and an exhaust guide (not shown) arranged to guide gases from the cylinders 14.

Each cylinder 14 may further comprise at its vertical top end at least one and typically a multiple number of inlet channels having at least one inlet valve 40 for controlling a flow of the inlet air to the combustion chamber 15, and at least one and typically a multiple number of exhaust channels having a least one exhaust valve 60 for controlling discharge of exhaust gases produced from the fuel combustion process taking place within the cylinder 14. The cylinder is only described in general terms since its parts and functionality is well known in the art. The ICE system 10 may also include additional engine components and system components.

Each one of the cylinders 14 defines at least partly a combustion chamber 15. As is also common, one end of the cylinder cavity is closed by a cylinder head. The piston 16 reciprocates in the cylinder and is connected to the crankshaft 18 so that the piston is set to reverse in the cylinder at an upper and lower dead centre positions.

The ICE system 10 here further comprises a fuel system 50. As illustrated in Fig. 2, the fuel system 50 defines a common fuel line 53 and is configured to supply hydrogen gas to the cylinder(s) 16 by means of the fuel gas injection arrangement(s) 100. Optionally, the fuel system 50 may include the plurality of fuel gas injection arrangements 100. Alternatively, the fuel gas injection arrangements 100 may be separate parts arranged in fluid communication with the fuel system 50. The number of fuel gas injection arrangements 100 may be equal to the numbers of cylinders of the ICE 20. The fuel gas injection arrangements 100 are arranged in fluid communication with the fuel line 53 of the fuel system 50.

The fuel system 50 here also comprises a fuel tank 52 containing the hydrogen fuel 51 in gaseous form 51a. The fuel 51 may also be partly arranged in liquid form in the fuel tank 52. The fuel 51 in the form of gaseous hydrogen 51a is supplied to the fuel gas injection arrangement 100 of the ICE 20 from the fuel tank 52 via the fuel circuit 53 of the fuel system 50. The fuel circuit 53 is arranged and configured to contain and transport the fuel, as illustrated by the arrows in Fig. 2, and may optionally include one or more additional fuel system components such as a fuel pump, fuel filter etc. By way of example, one additional component is a pressure regulator that regulates the pressure from the tank pressure down to what is desired by the fuel injector. These components are of conventional types and thus not further described herein.

In addition, the ICE 20 comprises an ignition source 30. The ignition source 30 is arranged in the cylinder and at a location facing the combustion chamber 15, as illustrated in Fig. 2. By way of example, the ignition source 30 is arranged at an upper end of the combustion cylinder and spaced apart from the fuel gas injection arrangements 100, as illustrated in Fig. 2. Other arrangements of the ignition source and the fuel injector are also conceivable. For example, the fuel gas injection arrangement 100 can be arranged on one side, radially spaced apart from the axial centre, and the ignition source on the other side of the axial centre.

The ignition source 30 is configured to ignite hydrogen gas jets 51b supplied via the fuel gas injection arrangement 100. By way of example, the ignition source 30 is a spark-plug 32. A spark plug 32 is a device for delivering electric current from an ignition system to the combustion chamber of a spark-ignition engine to ignite the compressed fuel/air mixture by an electric spark, while containing combustion pressure within the engine. Typically, in each cylinder 14, there is a corresponding spark plug 32 arranged to ignite a mix of fuel and oxygen in the cylinder. The hydrogen fuel 51 is generally compressed to a certain level with air. The compressed air-fuel mixture is thus subsequently ignited by the spark plug 32.

Turning again to the fuel gas injection arrangement 100 of the ICE system 10, one example embodiment of parts of the arrangement 100 will be described in relation to Figs. 3 in conjunction with Figs. 4A to 4B, while Figs. 5A to 5C illustrate various designs of the nozzle cap of the fuel gas injection arrangement 100. In particular, Fig. 3 is a perspective cross-sectional view of the fuel gas injection arrangement 100 in Fig. 2 according to example embodiments of the disclosure. The fuel gas injection arrangement 100 comprises the nozzle cap 102.

As illustrated in e.g. Figs. 2 and 3, the fuel gas injection arrangement 100 extends in an axial direction A and in a radial direction R. Further, the fuel gas injection arrangement 100 has a circumferential extension along a circumferential direction C. The fuel gas injection arrangement 100 also has a longitudinal centre axis Ac, which hereinafter is generally denoted as the axial centre axis. The axial centre axis of the fuel gas injection arrangement 100 is typically, although strictly not necessary, co-axially arranged with an axial centre axis of the piston, as illustrated in Fig. 2. However, in some examples, the axial centre axis of the fuel gas injection arrangement 100 may be slightly offset the axial centre axis of the piston. In some examples, the axial centre axis of the fuel gas injection arrangement 100 may be slightly inclined relative to the axial centre axis of the piston.

The terms "radial" or "radially" refer to the relative direction that is substantially perpendicular to an axial centreline of a particular component. Further, the term "longitudinal", "longitudinally", "axially" or "axial" refer to the relative direction that is substantially parallel and/or coaxially aligned to an axial centreline of a particular component. Also, the term "longitudinal", "longitudinally", "axially" or "axial" refer to a direction at least extending between axial ends of a particular component, typically along the arrangement or components thereof in the direction of the longest extension of the arrangement and/or components. The terms "vertical" and "vertically" generally correspond to the axial direction.

As used herein, the terms "upstream" and "downstream" refer to the relative direction with respect to fluid flow in a fluid pathway. For example, "upstream" refers to the direction from which the fluid flows, and "downstream" refers to the direction to which the fluid flows. Accordingly, in this context, the terms upstream and downstream are generally defined relative to the flow of fuel from the fuel tank 52 to the combustion chamber 15 of the cylinder 14, as illustrated in Fig. 2. Similarly, terms such as "upper", "above" and "top" as well as "lower", "bottom", "below" generally refer to the relative position of the part or component with respect to the axial direction.

The fuel gas injection arrangement 100 as illustrated in e.g. Figs. 2 and 3, is arranged vertically into the centre of the roof of combustion chamber, typically into the cylinder head. The fuel gas injection arrangement 100 is further configured to admit fuel gas jets 51b into the combustion chamber 15 of the ICE 20. As such, the fuel gas injection arrangement 100 is situated directly at the combustion chamber 15 and in the cylinder head, whereby the injector is capable of directly injecting hydrogen gas jets into the combustion chamber 15. Thus, the fuel gas injection arrangement is hydrogen fuel gas injection arrangement.

As mentioned above, the fuel gas injection arrangement 100 here comprises the injector body 101 (only indicated in Fig. 2). In addition, the fuel gas injection arrangement 100 comprises the nozzle cap 102 and an inlet valve arrangement 202, as illustrated e.g. in Fig. 3. Hence, the nozzle cap 102 is here defined as an outer part of the fuel gas injection arrangement 100. In addition, the nozzle cap 102 is here defined as the downstream part of the fuel gas injection arrangement 100. The nozzle cap 102 is configured to be attached to the injector body 101. Hence, the nozzle cap 102 and the injector body 101 are integral parts of the fuel gas injection arrangement 100. The nozzle cap 102 can be attached to the injector body 101 in several different manners, e.g. by a threaded fastener configuration, welded to the injector body or clamp-fitted to the injector body.

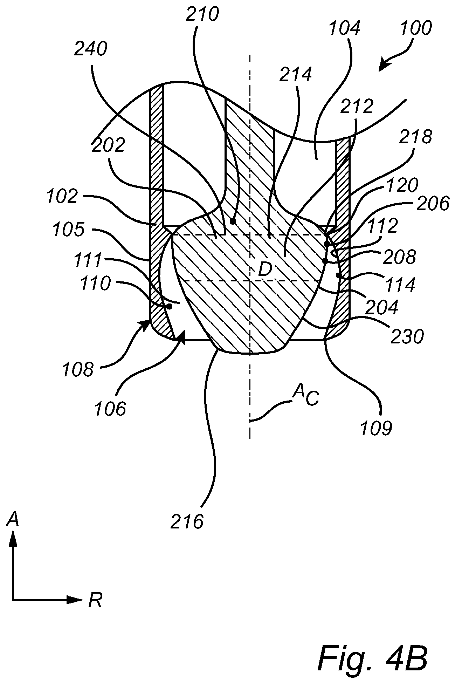

Fig. 3 depicts one example of the nozzle cap 102 for the fuel gas injection arrangement 100 in Fig. 2. Figs. 4A and 4B are cross-sectional side-views of the nozzle cap 102 and the valve 202 of the fuel gas injection arrangement along the cross-section A-A illustrated in Fig. 3.

As illustrated in Fig. 3 and further in Figs. 4A to 4B, the fuel gas injection arrangement 100 comprises the inlet valve arrangement 202. The inlet valve arrangement 202 is at least partly housed by the nozzle cap 102. The inlet valve arrangement may herein be denoted as the valve arrangement or even simply as the valve 202. The valve 202 is considered an inlet valve arrangement as it is generally disposed in an inlet portion of the fuel injection arrangement, typically corresponding to the inlet region of the nozzle cap, see e.g. Fig. 3.

By way of example, the nozzle cap 102 comprises a body part 105 defining an inner volume 111, as shown in Fig. 3, and also in Figs. 4A to 4B. The inner side of the body part, defining the inner volume 111, is shaped to accommodate a part of the valve arrangement 202. In the example illustrated in Figs. 4A to 4B, the nozzle cap 102 accommodates the entire valve arrangement 202. Further, as may be gleaned from e.g. Fig. 3 and Fig. 4A, the nozzle cap 102 has an inner circumferential side 110. The inner circumferential side 110 extends in the circumferential direction C of the nozzle cap 102. The inner circumferential side 110 also extends in the axial direction A of the nozzle cap 102. The inner circumferential side 110 has an inner circumferential surface.

In addition, the nozzle cap 102 comprises opposite axial end portions 107 and 108. Accordingly, the body part 105 is here provided with the axial end portions 107 and 108. The axial end portion 107 is an upstream axial end portion 107. The axial end portion 108 is a downstream axial end portion 108. Also, as illustrated in e.g. Fig. 3, and further in Figs. 4A to 4B, the axial end portions 107 and 108 are upper and lower axial end portions 107, 108, respectively.

The nozzle cap 102 also comprises an inlet 104 for receiving a flow of hydrogen in gaseous form, as indicated by reference 51a. The inlet 104 is generally arranged at the upstream axial end portion 107 of the nozzle cap 102. The flow of hydrogen is provided from the storage tank 52 (Fig. 2) of hydrogen in gaseous form. The hydrogen gas is typically pressurised. The flow of hydrogen through the inlet 104 is controllable by the inlet valve 202 arranged in the nozzle inlet 104. The valve 202 is here a pintle valve extended with a body portion, as illustrated in e.g. Figs. 4A and 4B, and also further described hereinafter. When a part of the valve 202 is in an upper position (Fig. 4B), the inlet 104 is closed and hydrogen is not allowed to enter the nozzle cap volume 111. In the lower valve position shown in e.g. Fig. 4A, the inlet 104 is open and hydrogen is allowed to enter the nozzle cap inner volume 111.

In other words, the inlet valve arrangement 202 is movable between a closed position, as illustrated in Fig. 4B, at which a portion of the inlet valve arrangement 202 is arranged in abutment with a valve seat 120, to prevent hydrogen gas from entering the inlet 104 of the nozzle cap 102, and an open position, as illustrated in Fig. 4A, at which the flow of hydrogen gas is allowed to flow between the inlet 104 and the at least one outlet 106 of the nozzle cap 102. Hence, the nozzle cap 102 also comprises the valve seat 120 whereby the movable valve 202 is sealing against the valve seat 120 when the valve 202 is in the closed state relative to the valve seat and where hydrogen streams are allowed to pass when the valve 202 is arranged in the open position relative to the valve seat 120. To this end, the flow of hydrogen through the fuel gas injection arrangement 100 is restricted by having a part of the movable valve 202 to seal against an inner part (inner side 110) of the non-movable nozzle cap 102 in the radial direction R and about the entire circumferential direction C. Accordingly, the valve seat 120 is a part of the non-moving part (nozzle cap) towards which the moving part (valve) seals.

The movement of the valve arrangement 202 between the open and closed positions is generally govern by the pressure-situation upstream and downstream the injection arrangement 100 and controlled by an actuator or the like of the fuel gas injection arrangement 100.

As depicted in Fig. 3, the nozzle cap 102 comprises an outlet 106 for providing an exit flow of hydrogen from the nozzle cap 102. The outlet is 106 arranged at the downstream axial end portion 108 of the nozzle cap 102, as illustrated in e.g. Fig. 4A.

The outlet 106 is configured to permit discharge of one or more gas jets 51b of fuel into the combustion chamber 15 of the ICE in a converging manner. Further details of the axial end portion 108 and the outlet 106 will be described hereinafter.

Turning again to the interplay with the nozzle cap 102 and the valve arrangement 202, the valve arrangement 202 comprises a protruding flow-guiding portion 204, see e.g. Fig. 4A. The protruding flow-guiding portion 204 is arranged to protrude radially towards the inner circumferential side 110 of the nozzle cap 102. The protruding flow-guiding portion 204 further extends in the axial direction A. Hence, the protruding flow-guiding portion 204 is here an axially extending flow guiding portion, as shown in Figs. 4A to 4B. The axially extending flow guiding portion 204 has an envelope surface 206 facing the inner circumferential side 110 of the nozzle cap 102, see e.g. Fig. 4A. The envelope surface 206 extends entirely about the circumferential direction C of the valve 202.

As further shown in Figs. 3 and 4A to 4B, the protruding flow-guiding portion 204 is here a convex outer portion 208. The convex outer portion 208 extends at least substantial part in the axial direction A. To this end, it should be generally appreciated that the envelope surface 206 is provided in the form of the convex surface. As such, the envelope surface 206 protrudes radially towards the inner circumferential side 110 of the nozzle cap 102. Typically, although strictly not required, the convex outer portion 208 extends circumferentially around the envelope surface 206 in a continuous manner.

In a similar vein, the nozzle cap 102 comprises a flow-guiding portion 112 disposed on the inner circumferential side 110, as shown in Figs. 4A and 4B. The flow-guiding portion 112 is thus a circumferential inner flow-guiding portion 112. The nozzle cap flow-guiding portion 112 is configured to guide the hydrogen gas 51a inside the nozzle cap 102. By way of example, as illustrated in e.g. Fig. 4A, the flow-guiding portion 112 comprises a circumferential concave portion 114 extending a substantial part in the axial direction.

The nozzle cap flow-guiding portion 112 extends in the axial direction to the outlet 106. By way of example, the nozzle cap flow-guiding portion 112 extends in a continuous manner from the valve seat 120 to the outlet 106. Hence, as depicted in e.g. Fig. 4A, the circumferential concave portion 114 is arranged axially between the valve seat 120 and the outlet 106 of the nozzle cap 102.

Moreover, as illustrated in e.g. Figs. 4A to 4B, the nozzle cap flow-guiding portion 112 is arranged to face the envelope surface 206 of the valve flow guiding portion 204 along the circumferential direction C. In other words, parts of the nozzle cap flow-guiding portion 112 and the valve protruding flow-guiding portion 204 are arranged radially opposite each other.

To this end, the nozzle cap flow-guiding portion 112 and the valve protruding flow-guiding portion 204 are configured to cooperate to redirect gaseous hydrogen 51a inside the nozzle cap 102. By way of example, assuming the valve 202 is oriented in its open position (Fig. 4A) during an injection of hydrogen gas into the combustion chamber 15, the hydrogen gas flow 51a enters through the inlet 104 and is initially guided by an upper portion of the axially extending flow guiding portion 204 of the valve 202 and the valve seat 120 before it enters the nozzle cap volume 111. If the axially extending flow guiding portion 204 was not present, vortices may be created inside the nozzle cap and suboptimal flow of hydrogen towards the outlet 106 may be obtained. However, as provided by the embodiments herein, the axially extending flow guiding portion 204 provides improved hydrogen flow guidance towards the outlet 106.

Subsequently, the streams of hydrogen gas 51a are guided further downstream in the nozzle cap 102 by the inner flow-guiding portion 112 of the nozzle cap 102. The inner flow-guiding portion 112 of the nozzle cap 102 provides additional improved hydrogen flow guidance towards the outlet 106.

As such, the axially extending flow guiding portion 204 of the valve 202 and the inner flow-guiding portion 112 of the nozzle cap 102 ensures that the flow of hydrogen follows its shape and is guided towards the outlet 106.

Optionally, the protruding flow-guiding portion 204 and the circumferential inner flow-guiding portion 112 of the nozzle cap are complementary in shape, as illustrated in e.g. Fig. 4A. In particular, the protruding flow-guiding portion 204 and the circumferential inner flow-guiding portion 112 are arranged provide a clearance for the hydrogen gas 51a to exit from the outlet 106 when the inlet valve arrangement 202 assumes the open position, as illustrated in Fig. 4A.

While the inlet valve arrangement 202 can be provided in several different configurations, the inlet valve arrangement 202 here also comprises a valve portion 210, as illustrated in Figs. 4A to 4B. Moreover, the inlet valve arrangement 202 here comprises an axially extending head portion 212. The axially extending head portion 212 has an upper end 214 arranged at the valve portion 210. Moreover, the axially extending head portion 212 has a lower end 216 facing away from the valve portion 210. In this type of configuration of the inlet valve arrangement 202, the valve portion 210 comprises a surface 218 arranged in abutment with the valve seat 120 when the inlet valve arrangement 202 assumes the closed position, as shown in Fig. 4B.

It may also be noted that when the inlet valve arrangement 202 is provided with the lower end 216, the lower end 216 is generally oriented in alignment in the axial direction A with a part defining the outlet 106 of the nozzle cap 102, at least when the inlet valve arrangement 202 is in the open position relative to the nozzle cap 102, as illustrated in Fig. 4A.

Optionally, the valve portion 210 and the head portion 212 are integrally formed with each other. The valve portion 210 and the head portion 212 may likewise be separate parts of the inlet valve arrangement 202 that are attached to each other so as to form the inlet valve arrangement 202. The distinction between the valve portion 210 and the head portion 212 is indicated in Fig. 4A with the dashed line 240. In addition, the inlet valve arrangement 202 and its components may be solid or partly hollow parts.

When the inlet valve arrangement 202 comprises the axially extending head portion 212, the axially extending flow guiding portion 204 generally forms part of the head portion.

Optionally, as illustrated in e.g. Fig 4A, the head portion 212 of the valve arrangement 202 further comprises a taper shaped surface 230. The tapered surface 230 is here a part of the convex outer portion 208. In addition, the tapered surface 230 extends from the upper end 214 to the lower end 216. Also, the taper shaped surface 230 extends in a continuous manner between the protruding flow-guiding portion 208 and the lower end 216. By way of example, and as illustrated in e.g. Fig. 4A, a diameter D of the head portion 212 decreases along the taper shaped surface 230 in the downstream axial direction from the valve protruding flow-guiding portion 204 to the lower end 216.

In addition, the nozzle cap flow-guiding portion 112 and the valve protruding flow-guiding portion 204 are configured to cooperate to redirect gaseous hydrogen 51a received from the inlet 104 towards the outlet 106 such that gaseous hydrogen jets 51b exiting the outlet 106 converge towards a geometrical intersection-axial centre region 150, see e.g. Fig. 4A.

As illustrated in Fig. 3 and 4A, the intersection-axial centre region 150 is a region where flow vectors from the gaseous fuel jets 51b intersect downstream the outlet 106. In other words, the gaseous fuel jets 51b exiting from different positions from the nozzle cap 102 are guided by the inner shape of the nozzle cap and the valve, as mentioned herein, to converge towards each other downstream the outlet 106 so as to ultimately intersect at the intersection-axial centre region 150.

As depicted in e.g. Fig. 4A, the geometrical intersection-axial centre region 150 is located downstream and axially distanced from the outlet 106. Accordingly, the internal flow guiding portions 112, 204 of the nozzle cap 102 and the valve 202 are arranged and configured to provide a converging effect of a number of hydrogen jets 51b.

The converging effect can be varied in several different ways as will be further described hereinafter, e.g. in relation to Figs. 4A - 4B, and 5A to 5C. In addition, the converging effect can be provided by several different combinations of nozzle cap and valve arrangements, as will also be described hereinafter, e.g. in relation to Figs. 4A - 4B, and 5A to 5C. For ease of the reference, the following description of the converging function of the fuel gas injection arrangement 100 will be provided in relation to the example illustrated Figs. 4A and 4B in conjunction with Fig. 5A. Fig. 5A conceptually illustrates the axial end portion of the nozzle cap 102 in Figs. 3, 4A and 4B by way of a perspective view and a bottom view.

Hence, turning to Figs. 4A and 4B in conjunction with Fig. 5A, there is depicted one example of how gaseous hydrogen jets 51b exit an outlet 106 defined by a continuous outlet region in the form a circular. The at least one outlet 106 is here a single-orifice 106a. More specifically, the single orifice is a hole with a circular cross section.

As illustrated in Fig. 5A, the single-orifice 106a extends circumferentially around the lower end portion 216 of the valve arrangement 202. As mentioned above, and also illustrated in Fig. 4A, the gaseous hydrogen jets 51b exiting the single-orifice 106a converge towards the geometrical intersection-axial centre region 150. In particular, the gaseous fuel jets 51b exiting the single-orifice 106a converge at an intersection-point 152 along the axial centre line Ac extending through the geometrical intersection-axial centre region 150. As such, the intersection-point 152 is located in the geometrical intersection-axial centre region 150, which intersects the axial centre line Ac. As such, the intersection-point 152 is a point along the axial centre line extending through the geometrical impingement-axial centre region 150 where flow vectors from the gaseous fuel jets 51b intersect.

The precise location of the geometrical intersection-axial centre region 150, and thus the intersection-point 152, may generally vary for different types of injection arrangements and may be selected in view of the intended installation of the injection arrangement into a given ICE system 10.

In addition, the location of the geometrical intersection-axial centre region 150, and thus the intersection-point 152, may generally be defined by the configuration of the nozzle cap flow-guiding portion 112 and the valve protruding flow-guiding portion 204. By way of example, the location of the geometrical intersection-axial centre region 150 is defined by the selected shape and geometry of the nozzle cap flow-guiding portion 112 and the valve protruding flow-guiding portion 204, as defined above and illustrated in e.g. Figs. 4A-4B and 5A. The location of the geometrical intersection-axial centre region 150 is further defined by the diameter d1 of the single orifice 106a, as indicated in Fig. 5A.

In the example embodiment illustrated in Figs. 4A and 4B in conjunction with Fig. 5A, the location of the intersection-axial centre region 150 in the axial direction A is defined by a distance L, as measured from a cross-sectional plane RP1 radially through the at least one outlet 106. In this example, the cross-sectional plane RP1 extends radially across an outlet 106a in the form of a single orifice. In addition, the location of the intersection-axial centre region 150 in the axial direction A is defined by a converging angle Y, as depicted in Fig. 4A. The converging angle Y is defined as the angle between the cross-sectional plane RP1 and a gaseous fuel jet 51b exiting the at least one outlet 106 (in this example corresponding to the single orifice).

While the angle Y can vary for different types of injection arrangement 100, there is provided a converging effect of the gaseous jets with an angle Y of about between 5 degrees and 60 degrees. However, it may also be possible to obtain a converging effect of the gaseous jets with an angle Y of about 0 degrees, or slightly more than 0 degrees, for some combinations of ICE system components.

An angle Y of about between 5 degrees and 60 degrees may provide a particularly useful converging effect for hydrogen ICE system. Still preferably, an angle Y of about between 10 degrees and 40 degrees may provide an even more useful converging effect for some hydrogen ICE systems for heavy-duty vehicles.

In order to further facilitate the configuration of the internal flow guiding portions 112, 204 of the nozzle cap 102 and the valve 202 to provide the converging effect of a number of hydrogen jets 51b, the axial end portion 108 of the nozzle cap 102 here comprises an edge 109 defining the at least one outlet 106. The outlet 106 here corresponds to the single orifice 106a in Fig. 4A.

The number of outlet regions 106a-106n of the outlet 106 of the nozzle cap 102 may vary in shape and size. In this context, it should be noted that an outlet region of the outlet is generally defined by the outlet 106 of the nozzle cap 102 in combination with boundaries of the valve 202 as provided when the valve 202 is in the open position. This is at least partly due to the location of the valve 202 in outlet 106 when the valve 202 is in the open position, as illustrated in Figs. 3, 4A to 4B and 5A to 5C.

Turning to Fig. 5B, there is shown a nozzle cap 102 having two outlet regions. Fig. 5b conceptually illustrates the axial end portion 108 of the nozzle cap 102 in conjunction with the valve 202 by way of a perspective view and a bottom view. In Fig. 5B, there is depicted how gaseous hydrogen jets 51b exit an outlet 106 defined by two outlet regions 106a, 106b.

As mentioned above with respect to the example embodiment in Figs. 3, 4A-4B and 5A, the nozzle cap flow-guiding portion 112 and the valve protruding flow-guiding portion 204 are collectively configured to guide and converge the gaseous fuel jets exiting the outlet region 106 towards the geometrical intersection-axial centre region 150.

In Fig. 5B, the gaseous fuel jets exiting the outlet region 106 are further converged by the plurality of the outlet regions 106a, 106b that are circumferentially arranged around the axial centre line Ac. In addition, the distance L here essentially corresponds to the mean diameter of the openings of the outlet regions 106a - 106b.

In Fig. 5B, the outlet regions 106a, 106b are uniformly distributed around the axial centre line Ac. In addition, the outlet regions 106a, 106b are of the same geometrical size.

Alternatively, although not illustrated, the outlet regions 106a, 106b are non-uniformly distributed around the axial centre line Ac. In addition, the outlet regions 106a, 106b may be of different geometrical sizes.

In some example embodiments, at least some of the gaseous fuel jets 51b exiting from the plurality of outlet regions 106a, 106b converge at a common intersection-point 152 along the axial centre line extending through the geometrical intersection-axial centre region. This is generally provided by selecting appropriate shapes of the nozzle cap flow-guiding portion 112 and the valve protruding flow-guiding portion 204 in view of the size and position of the outlet regions.

In some example embodiments, at least some of the gaseous fuel jets 51b exiting from the plurality of outlet regions 106a, 106b individually converges towards the geometrical intersection-axial centre region 150 and at different axial distances from the at least one outlet region. This is also generally provided by selecting appropriate shapes of the nozzle cap flow-guiding portion 112 and the valve protruding flow-guiding portion 204 in view of the size and position of the outlet regions.

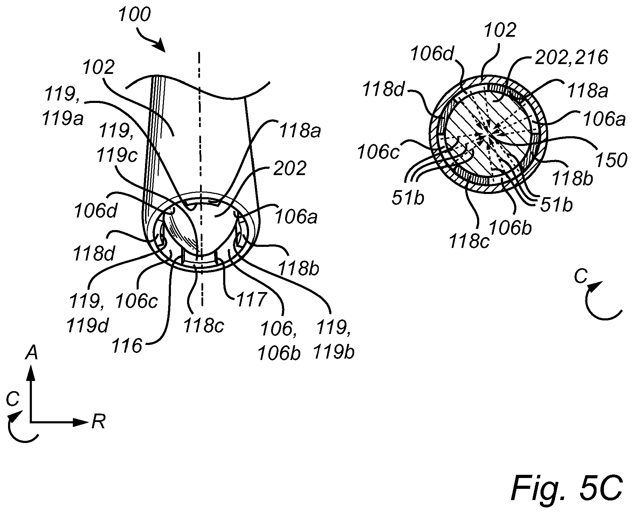

Fig. 5C conceptually illustrates the axial end portion 108 of the nozzle cap 102 in conjunction with the valve 202 by way of a perspective view and a bottom view. In Fig. 5C, there is depicted another example of how gaseous hydrogen jets 51b exit an outlet 106 defined by four outlet regions 106a - 106d.

As mentioned above with respect to the example embodiment in Figs. 3, 4A-4B and 5A, the nozzle cap flow-guiding portion 112 and the valve protruding flow-guiding portion 204 are collectively configured to guide and converge the gaseous fuel jets 51b exiting the outlet region 106 towards the geometrical intersection-axial centre region 150.

In Fig. 5C, the gaseous fuel jets 51b exiting the outlet 106 are further converged by the plurality of the outlet regions 106a - 106d that are circumferentially arranged around the axial centre line Ac. In addition, the distance L here essentially corresponds to the mean diameter of the openings of the outlet regions 106a - 106d.

In Fig. 5C, the outlet regions 106a - 106d are uniformly distributed around the axial centre line. In addition, the outlet regions 106a - 106d are of the same geometrical size.

Alternatively, although not illustrated, the outlet regions 106a - 106d are non-uniformly distributed around the axial centre line. In addition, the outlet regions 106a - 106d may be of different geometrical sizes.

In some example embodiments, at least some of the gaseous fuel jets 51b exiting from the plurality of outlet regions 160a - 106d converge at a common intersection-point 152 along the axial centre line extending through the geometrical intersection-axial centre region 150. In some example embodiments, at least some of the gaseous fuel jets 51b exiting from the plurality of outlet regions 160a - 106d individually converges towards the geometrical intersection-axial centre region 150 and at different axial distances from the at least one outlet 106. This is generally provided by selecting appropriate shapes of the nozzle cap flow-guiding portion 112 and the valve protruding flow-guiding portion 204 in view of the size and position of the outlet regions.

As mentioned above, it should be noted that an outlet region of the outlet 106 is generally defined by the outlet 106 of the nozzle cap 102 in combination with shape of the valve 202 as provided when the valve 202 is in the open position and arranged in the centre of the outlet 106 of the nozzle cap 102. This is at least partly due to the location of the valve 202 in the outlet 106 when the valve 202 is in the open position, as illustrated in Figs. 3, 4A to 4B and 5A to 5C.

In addition, the example embodiments illustrated in Figs. 5B and 5c also include nozzle caps 102 having further guiding functionalities. As illustrated in Figs. 5B and 5C, the outlet 106 of the axial end portion 108 comprises one or more radial protrusions 118, 118a-n. In Fig. 5B, the axial end portion 108 comprises two radial protrusions 118a and 118b. The number of the radial protrusions 118 may also be more than two, such as three or four radial protrusions 118a - 118d (Fig. 5C).

The radial protrusions 118a, 118b may extends radially from the inner side 110 of the nozzle cap 102 towards the axial centre axis Ac. The two radial protrusions 118a, 118b are arranged essentially radially opposite each other. Further, the circumferential extension of each one of the radial protrusions 118a, 118b is delimited in the circumferential direction C by a pair of corresponding side sections 116, 117, as illustrated e.g. Fig. 5B. Each one of the side sections 116, 117 extends in the axial direction A and in the radial direction R. Hence, the side sections 116 and 117 are denoted as axially extending side sections 116, 117.

In these example embodiments, a circumferential extension of the outlet 106 is at least partly delimited by the radial protrusions 118, 118a, 118b. This means that the outlet 106 of the nozzle cap 102 in Figs. 5B and 5C is split up into a number of outlet regions, e.g. a first outlet region 106a and a second outlet region 106b (Fig. 5B). The first and second outlet regions 106a, 106b are circumferentially spaced apart outlet regions 106a, 106b. As such, the radial protrusions 118a, 118b are distributed in the circumferential direction to define the two circumferentially spaced apart outlet regions 106a, 106b.

As depicted in e.g. Figs. 5B and 5C, each one of the radial protrusions 118a, 118b comprises a corresponding inner surface region 119, 119a, 119b. Each one of the inner surface regions 119a, 119b is arranged to reduce a crossflow of the hydrogen gas flow inside the nozzle cap 102 and guide the hydrogen gas flow towards the outlet regions 106a, 106b. As such, the inner surface region 119 of the radial protrusion 118 is shaped to guide and re-directing a flow of hydrogen received from the inlet 104 towards the exit(s) of the outlet 106 provided by the outlet regions 106a, 106b. To this end, the protrusions 118a, 118b arranged between the outlet regions 106a, 106b further guide the flow of hydrogen by their inner surface regions 119a, 119b and by their axially extending side sections 116a, 117a and 116b, 117b, respectively. In this manner, each one of the radial protrusions 118a, 118b is arranged and configured to minimize cross-flow of the hydrogen streams 51.

Due to the combined arrangement of the flow-guiding portion 204 of the valve 202 and the inner flow-guiding portion 112 of the nozzle cap 102, their corresponding inner surface region 119, inner circumferential radial protrusion 114 and valve protrusion 208 cooperate to fluidly guide the flow of hydrogen towards the outlet 106. In particular, the inner circumferential radial protrusion 114 and valve protrusion 208 cooperate to guide the flow of hydrogen towards the outlet 106 whereby the radial protrusion 118 is located to further guide the flow of hydrogen by its sides 116, 117 to the exit of the outlet 106, while the radial protrusion 118 also being capable of minimizing cross-flow of hydrogen streams.

It should be noted that it may generally not be required, and also not possible, to provide for a complete sealing between the surfaces of the radial protrusion 118 and the facing surface of the valve 202 since the valve is displacing from the closed position to the open position. Therefore, due to some desired tolerances, the nozzle cap and the valve may be designed with a small radial gap therebetween, i.e. at the downstream parts of the arrangement 100.

Further, the size of the radial protrusions 118, 118a, 118b is generally selected in view of the dimension of the valve 202, and also in view of the overall design of the ICE system. By way of example, the extension of the radial protrusion 118 in the radial direction R should be relatively large to fill-up the gap to the valve 202, while leaving a distance to provide a desired clearance, as mention above. To this end, each one of the radial protrusions 118, 118a, 118b generally extends relatively close to the valve 202, which advantageously further contribute to reducing cross-flow of hydrogen across upstream the exit of the outlet region 106. However, it should be noted that the size of the radial protrusion should not compromise the ability for the valve to move between its open and closed positions.

To sum up, the internal flow guiding portions 112, 204 of the nozzle cap 102 and the valve 202 are arranged to provide a converging effect of a number of hydrogen jets 51b. In addition, in an example when the nozzle cap 102 includes the radial protrusion 118, the internal flow guiding portions 112, 204 of the nozzle cap 102 and the valve 202 are arranged to provide a converging effect of a number of hydrogen jets 51b, while the radial protrusion 118 is configured to further guide the hydrogen streams.

The internal flow guiding portions 112 thus has a flow-guiding surface configured to guide a flow of hydrogen from the inlet 102 towards the outlet 106 and the valve flow guiding portion 204 has a corresponding flow-guiding surface, generally being a part of the envelope surface, configured to guide a flow of hydrogen from the inlet 102 towards the outlet 106. In addition, the radial protrusion 118 has surface configured to guide the hydrogen streams from the inlet 102 towards the outlet 106.

Although other possibilities are conceivable, the nozzle caps are preferably made of steel. In a similar vein, the valve 202 and the overall fuel gas injection arrangement 100 are preferably made of steel. Moreover, the fuel gas injection arrangement 100 is here generally a single nozzle configuration.

The fuel gas injection arrangement 100 as illustrated in the Figures, e.g. Fig. 3 may include a number of additional components, such as an actuator (not shown). The actuator is generally arranged in communication with the control unit 90. The control unit 90 is configured to control the operation of the fuel gas injection arrangement 100. The control unit 90 may be a separate part of a power unit of the fuel injector. Alternatively, the control unit may be a part of the electronic control unit of the vehicle. By way of example, the electronic control unit of the vehicle generates a control signal to the power unit of the fuel injector, which transforms the control signal into an actuation signal for the injector. The actuator signal is transferred to the injector, preferably to the actuator of the injector. Subsequently, the actuator controls the movement of the valve 202 within the injection arrangement 100. The actual actuation of the control of the injection arrangement 100 and movement of the valve 202 can be provided by an actuator of various kind, such as a solenoid, piezo or the like.

By way of example, the fuel gas injection arrangement as illustrated in the Figures, e.g. Fig. 3 is controllable by the control unit 90 to inject hydrogen gas into the combustion chamber 15 with a low injection pressure of between 15 to 60 bar. In particular, the fuel gas injection arrangement 100 as illustrated in the Figures, e.g. Fig. 3, is controllable by the control unit 90 to inject hydrogen gas into the combustion chamber 15 with a low injection pressure of between 15 to 30 bar.

As mentioned above, the control unit 90 is typically configured to control the fuel gas injection arrangement 100 in response to one or more control signals. The control signal can include different types of data and instructions for the arrangement 100. By way of example, the control signal contains data indicative of a hydrogen system pressure, a number of injections per engine cycle, a timing for start of each injection, a duration of each injection, a separation time between injections.

By way of example, the control unit 90 is arranged and configured to inject hydrogen directly into the cylinder during a compression stroke. In addition, the fuel injection is generally controlled to occur when the intake valves 40 are completely closed.

The control unit 90 here also controls the movement of the inlet valve arrangement 202 by controlling one or more actuators in communication with the inlet valve arrangement 202. The movement of the inlet valve arrangement 202 may as an example be controlled on the basis of a control signal containing data indicating the pressure upstream and downstream the fuel gas injection arrangement 100.

The control unit may include a microprocessor, microcontroller, programmable digital signal processor or another programmable device. Thus, the control unit typically comprises electronic circuits and connections as well as processing circuitry such that the control unit can communicate with different parts of the ICE system such as the ICE, the fuel gas injection arrangement 100 and any other component of the vehicle, such as the clutch, the gear box and/or any other parts in need of being operated in order to provide the functions of the example embodiments. The control unit may comprise modules in either hardware or software, or partially in hardware or software and communicate using known transmission buses such as CAN-bus and/or wireless communication capabilities. In one example, the control unit comprises the processing circuitry configured to operate the fuel injection arrangement 100. The processing circuitry may be a general purpose processor or a specific processor. The control unit typically comprises a non-transistory memory for storing computer program code and data upon. Thus, the control unit may be embodied by many different constructions.

The control unit 90 may be or include any number of hardware components for conducting data or signal processing or for executing computer code stored in memory. The memory may be one or more devices for storing data and/or computer code for completing or facilitating the various methods described in the present description. The memory may include volatile memory or non-volatile memory. The memory may include database components, object code components, script components, or any other type of information structure for supporting the various activities of the present description. According to an exemplary embodiment, any distributed or local memory device may be utilized with the systems and methods of this description. According to an exemplary embodiment the memory is communicably connected to the processor (e.g., via a circuit or any other wired, wireless, or network connection) and includes computer code for executing one or more processes described herein.

The present disclosure also relates to an ICE system in the form of a hydrogen internal combustion engine comprising the fuel gas injection arrangement 100, as described herein. The present disclosure further relates to a vehicle comprising the fuel gas injection arrangement as described herein and/or the hydrogen ICE system, as described herein.

## Claims

1. A fuel gas injection arrangement (100) for directly injecting a gaseous fuel into a combustion chamber of an internal combustion engine, the fuel gas injection arrangement (100) extending in an axial direction (A) and comprising
a nozzle cap (102) having a body part (105) with an inner circumferential side (110) at least partly defining an inner volume, an inlet (104) for receiving gaseous fuel (51a) and at least one outlet (106) arranged at an axial end portion (108) of the nozzle cap (102);
an inlet valve arrangement (202) at least partly accommodated in the body part, the inlet valve arrangement (202) being movable between a closed position in which a portion of the inlet valve arrangement is arranged in abutment with a valve seat of the nozzle cap to prevent fuel gas from entering the inlet, and an open position in which the fuel gas is allowed to flow between the inlet and the at least one outlet;
wherein said nozzle cap further comprises a flow-guiding portion (112) disposed on the inner circumferential side and said inlet valve arrangement comprises a corresponding protruding flow-guiding portion (204) protruding radially towards the inner circumferential side;
said nozzle cap flow-guiding portion and said valve protruding flow-guiding portion being configured to cooperate to redirect gaseous fuel received from the inlet towards the at least one outlet such that gaseous fuel jets (51b) exiting the at least one outlet converge towards a geometrical intersection-axial centre region (150), said geometrical intersection-axial centre region being located downstream and axially distanced from said at least one outlet.

2. The fuel gas injection arrangement according to claim 1, wherein a location of the intersection-axial centre region in the axial direction is defined by a distance L, as measured from a cross-sectional plane (RP1) radially through the at least one outlet, and a converging angle Y, being defined as the angle between the cross-sectional plane (RP1) and a gaseous fuel jet (51b) exiting the at least one outlet.

3. The fuel gas injection arrangement according to claim 2, wherein the distance L essentially corresponds to the mean diameter of an outlet region (106a - 106n) defined by the at least one outlet.

4. The fuel gas injection arrangement according to any one of the preceding claims, wherein the nozzle cap flow-guiding portion comprises a circumferential concave portion extending a substantial part in an axial direction.

5. The fuel gas injection arrangement according to any one of the preceding claims, wherein at least a part of the nozzle cap flow-guiding portion extends in the axial direction to the at least one outlet.

6. The fuel gas injection arrangement according to any one of the preceding claims, wherein the at least one outlet (106) is a single-orifice (106a) extending circumferentially around an end portion (216) of the valve arrangement, whereby at least one or more gaseous fuel jets exiting the single-orifice converge at an intersection-point (152) along an axial centre line (Ac) extending through the geometrical intersection-axial centre region.

7. The fuel gas injection arrangement according to any one of the claims 1 to 6, wherein the at least one outlet region (106) comprises a plurality of outlet regions (106a to 106n) circumferentially arranged around an axial centre line.

8. The fuel gas injection arrangement according to any one of claims 7 or 8, wherein at least some of the gaseous fuel jets exiting from said plurality of outlet regions converge at a common intersection-point along an axial centre line extending through the geometrical intersection-axial centre region.

9. The fuel gas injection arrangement according to any one of claims 7 or8, wherein at least some of the gaseous fuel jets exiting from said plurality of outlet regions individually converges towards said geometrical intersection-axial centre region and at different axial distances from said at least one outlet.

10. The fuel gas injection arrangement according to any one of the preceding claims, wherein the protruding flow-guiding portion (204) is disposed on an envelope surface (206) of the valve arrangement.

11. The fuel gas injection arrangement according to any one of the preceding claims, wherein the protruding flow-guiding portion (204) is a convex outer portion (208) extending a substantial part in an axial direction.

12. The fuel gas injection arrangement according to any one of the preceding claims, wherein parts of said nozzle cap flow-guiding portion and said protruding flow-guiding portion are arranged radially opposite each other.

13. The fuel gas injection arrangement according any one of the preceding claims, wherein the inlet valve arrangement comprises a valve portion (210) and an axially extending head portion (212) having an upper end (214) arranged at the valve portion (210), and a lower end (216) facing away from the valve portion (210), wherein the valve portion (210) comprises a surface (218) arranged in abutment with the valve seat (220) when the inlet valve arrangement assumes the closed position.

14. The fuel gas injection arrangement according to any one of claims 19 - 21, wherein the head portion (212) comprises a taper shaped surface (230) between the protruding flow-guiding portion (208) and the lower end (216).

15. The fuel gas injection arrangement according to any one of the preceding claims, wherein the nozzle cap is an outer part of the fuel gas injection arrangement, said nozzle cap being configured to attach to an injector body of the fuel gas injection arrangement.

## Patentansprüche

1. Kraftstoffeinspritzanordnung (100) zum direkten Einspritzen eines gasförmigen Kraftstoffs in eine Verbrennungskammer eines Verbrennungsmotors, wobei sich die Kraftstoffeinspritzanordnung (100) in einer axialen Richtung (A) erstreckt und Folgendes umfasst:
eine Düsenkappe (102), die einen Körperabschnitt (105) mit einer Innenumfangsseite (110) aufweist, die mindestens teilweise ein Innenvolumen definiert, einen Einlass (104) zum Aufnehmen von gasförmigem Kraftstoff (51a) und mindestens einen Auslass (106) aufweist, der an einem axialen Endabschnitt (108) der Düsenkappe (102) angeordnet ist;
eine Einlassventilanordnung (202), die mindestens teilweise in dem Körperabschnitt untergebracht ist, wobei die Einlassventilanordnung (202) zwischen einer geschlossenen Position, in der ein Abschnitt der Einlassventilanordnung im Anschlag mit einem Ventilsitz der Düsenkappe angeordnet ist, um zu verhindern, dass Kraftstoff in den Einlass eintritt, und einer offenen Position, in der der Kraftstoff zwischen dem Einlass und dem mindestens einen Auslass strömen kann, beweglich ist;
wobei die Düsenkappe ferner einen an der Innenumfangsseite angeordneten strömungsführenden Abschnitt (112) umfasst und die Einlassventilanordnung einen entsprechenden vorstehenden strömungsführenden Abschnitt (204) umfasst, der radial in Richtung der Innenumfangsseite vorsteht;
wobei der strömungsführende Abschnitt der Düsenkappe und der vorstehende strömungsführende Abschnitt des Ventils zum Zusammenwirken konfiguriert sind, um den vom Einlass aufgenommenen gasförmigen Kraftstoff in Richtung des mindestens einen Auslasses umzulenken, so dass die aus dem mindestens einen Auslass austretenden gasförmigen Kraftstoffstrahlen (51b) in Richtung eines geometrischen Schnittpunkts des axialen Mittelbereichs (150) zusammenlaufen, wobei der geometrische Schnittpunkt des axialen Mittelbereichs stromabwärts und axial beabstandet von dem mindestens einen Auslass liegt.

2. Kraftstoffeinspritzanordnung nach Anspruch 1, wobei eine Position des Schnittpunkts des axialen Mittelbereichs in der axialen Richtung durch einen Abstand L, gemessen von einer Querschnittsebene (RP1) radial durch den mindestens einen Auslass, und einen Konvergenzwinkel Y definiert ist, der als der Winkel zwischen der Querschnittsebene (RP1) und einem aus dem mindestens einen Auslass austretenden gasförmigen Kraftstoffstrahl (51b) definiert ist.

3. Kraftstoffeinspritzanordnung nach Anspruch 2, wobei der Abstand L im Wesentlichen dem Durchschnittsdurchmesser eines durch den mindestens einen Auslass definierten Auslassbereichs (106a - 106n) entspricht.

4. Kraftstoffeinspritzanordnung nach einem der vorhergehenden Ansprüche, wobei der strömungsführende Abschnitt der Düsenkappe einen konkaven Umfangsabschnitt umfasst, der sich über einen wesentlichen Teil in einer axialer Richtung erstreckt.

5. Kraftstoffeinspritzanordnung nach einem der vorhergehenden Ansprüche, wobei sich mindestens ein Teil des strömungsführenden Abschnitts der Düsenkappe in der axialen Richtung zu dem mindestens einen Auslass erstreckt.

6. Kraftstoffeinspritzanordnung nach einem der vorhergehenden Ansprüche, wobei der mindestens eine Auslass (106) eine einzelne Öffnung (106a) ist, die sich in Umfangsrichtung um einen Endabschnitt (216) der Ventilanordnung herum erstreckt, wobei mindestens ein oder mehrere aus der einzelnen Öffnung austretende gasförmige Kraftstoffstrahlen an einem Schnittpunkt (152) entlang einer axialen Mittellinie (Ac) zusammenlaufen, die sich durch den geometrischen Schnittpunkt des axialen Mittelbereichs erstreckt.

7. Kraftstoffeinspritzanordnung nach einem der Ansprüche 1 bis 6, wobei der mindestens eine Auslassbereich (106) eine Vielzahl von Auslassbereichen (106a bis 106n) umfasst, die in Umfangsrichtung um eine axiale Mittellinie herum angeordnet sind.

8. Kraftstoffeinspritzanordnung nach einem der Ansprüche 7 oder 8, wobei mindestens einige der aus der Vielzahl von Auslassbereichen austretenden gasförmigen Kraftstoffstrahlen an einem gemeinsamen Schnittpunkt entlang einer axialen Mittellinie zusammenlaufen, die sich durch den geometrischen Schnittpunkt des axialen Mittelbereichs erstreckt.

9. Kraftstoffeinspritzanordnung nach einem der Ansprüche 7 oder 8, wobei mindestens einige der aus der Vielzahl von Auslassbereichen austretenden gasförmigen Kraftstoffstrahlen einzeln in Richtung des geometrischen Schnittpunkts des axialen Mittelbereichs und in unterschiedlichen axialen Abständen von dem mindestens einen Auslass zusammenlaufen.

10. Kraftstoffeinspritzanordnung nach einem der vorhergehenden Ansprüche, wobei der vorstehende strömungsführende Abschnitt (204) an einer Mantelfläche (206) der Ventilanordnung angeordnet ist.

11. Kraftstoffeinspritzanordnung nach einem der vorhergehenden Ansprüche, wobei der vorstehende strömungsführende Abschnitt (204) ein konvexer Außenabschnitt (208) ist, der sich zu einem wesentlichen Teil in einer axialen Richtung erstreckt.

12. Kraftstoffeinspritzanordnung nach einem der vorhergehenden Ansprüche, wobei Teile des strömungsführenden Abschnitts der Düsenkappe und des vorstehenden strömungsführenden Abschnitts radial einander gegenüberliegend angeordnet sind.

13. Kraftstoffeinspritzanordnung nach einem der vorhergehenden Ansprüche, wobei die Einlassventilanordnung einen Ventilabschnitt (210) und einen sich axial erstreckenden Kopfabschnitt (212) umfasst, der ein am Ventilabschnitt (210) angeordnetes oberes Ende (214) und ein vom Ventilabschnitt (210) abgewandtes unteres Ende (216) aufweist, wobei der Ventilabschnitt (210) eine Oberfläche (218) umfasst, die im Anschlag mit dem Ventilsitz (220) angeordnet ist, wenn die Einlassventilanordnung die geschlossene Position einnimmt.

14. Kraftstoffeinspritzanordnung nach einem der Ansprüche 19-21, wobei der Kopfabschnitt (212) eine konisch geformte Oberfläche (230) zwischen dem vorstehenden strömungsführenden Abschnitt (208) und dem unteren Ende (216) umfasst.

15. Kraftstoffeinspritzanordnung nach einem der vorhergehenden Ansprüche, wobei die Düsenkappe ein äußeres Teil der Kraftstoffeinspritzanordnung ist, wobei die Düsenkappe dazu konfiguriert ist, an einem Einspritzkörper der Kraftstoffeinspritzanordnung befestigt zu werden.

## Revendications

1. Dispositif d'injection de gaz combustible (100) destiné à injecter directement un gaz combustible dans une chambre de combustion d'un moteur à combustion interne, l'agencement d'injection de gaz combustible (100) s'étendant dans une direction axiale (A) et comprenant un capuchon de buse (102) comprenant une section de corps (105) avec un côté circonférentiel intérieur (110) définissant au moins partiellement un volume intérieur, une entrée (104) destinée à recevoir du gaz combustible (51a) et au moins une sortie (106) disposée au niveau d'une section d'extrémité axiale (108) du capuchon de buse (102) ;
un agencement de soupape d'admission (202) logé au moins partiellement dans la section de corps, l'agencement de soupape d'admission (202) étant mobile entre une position fermée dans laquelle une section de l'agencement de soupape d'admission est agencée en butée contre un siège de soupape du capuchon de buse pour empêcher le gaz combustible de pénétrer dans l'admission, et une position ouverte dans laquelle le gaz combustible peut circuler entre l'admission et la ou les sorties ;
ledit capuchon de buse comprenant en outre une section de guidage d'écoulement (112) disposée sur le côté circonférentiel intérieur et ledit agencement de soupape d'admission comprend une section saillante de guidage d'écoulement correspondante (204) faisant saillie radialement vers le côté circonférentiel intérieur ;
ladite section de guidage d'écoulement du capuchon de buse et ladite section saillante de guidage d'écoulement de soupape étant configurées pour coopérer pour rediriger le gaz combustible reçu de l'admission vers au moins une sortie de sorte que les jets de gaz combustible (51b) sortant de la ou des sorties convergent vers une zone centrale axiale d'intersection géométrique (150), ladite zone centrale axiale d'intersection géométrique étant située en aval et axialement distante de ladite ou desdites sorties.

2. Agencement d'injection de gaz combustible selon la revendication 1, dans lequel un emplacement de la zone centrale axiale d'intersection dans la direction axiale est défini par une distance L, telle que mesurée à partir d'un plan de section transversale (RP1) radialement à travers l'au moins une sortie, et un angle convergent Y étant défini comme l'angle entre le plan de section transversale (RP1) et un jet de gaz combustible (51b) sortant de l'au moins une sortie.

3. Dispositif d'injection de gaz combustible selon la revendication 2, dans lequel la distance L correspond essentiellement au diamètre moyen d'une zone de sortie (106a-106n) définie par l'au moins une sortie.

4. Agencement d'injection de gaz combustible selon l'une quelconque des revendications précédentes, dans lequel la section de guidage d'écoulement de capuchon de buse comprend une section concave circonférentielle s'étendant sur une partie substantielle dans une direction axiale.

5. Agencement d'injection de gaz combustible selon l'une quelconque des revendications précédentes, dans lequel au moins une section de la section de guidage d'écoulement de capuchon de buse s'étend dans la direction axiale vers l'au moins une sortie.

6. Agencement d'injection de gaz combustible selon l'une quelconque des revendications précédentes, dans lequel l'au moins une sortie (106) est un orifice unique (106a) s'étendant circonférentiellement autour d'une section d'extrémité (216) de l'agencement de soupape, au moins un ou plusieurs jets de gaz combustible sortant de l'orifice unique convergeant à un point d'intersection (152) le long d'une ligne centrale axiale (Ac) s'étendant à travers la zone centrale axiale d'intersection géométrique.

7. Agencement d'injection de gaz combustible selon l'une quelconque des revendications 1 à 6, dans lequel l'au moins une zone de sortie (106) comprend une pluralité de zones de sortie (106a à 106n) disposées circonférentiellement autour d'une ligne centrale axiale.

8. Agencement d'injection de gaz combustible selon l'une quelconque des revendications 7 ou 8, dans lequel au moins certains des jets de gaz combustible sortant de ladite pluralité de zones de sortie convergent à un point d'intersection commun le long d'une ligne centrale axiale s'étendant à travers la zone centrale axiale d'intersection géométrique.

9. Agencement d'injection de gaz combustible selon l'une quelconque des revendications 7 ou 8, dans lequel au moins certains des jets de gaz combustible sortant de ladite pluralité de zones de sortie convergent individuellement vers ladite zone centrale axiale d'intersection géométrique et à des distances axiales différentes de ladite au moins une sortie.

10. Agencement d'injection de gaz combustible selon l'une quelconque des revendications précédentes, dans lequel la section saillante de guidage d'écoulement (204) est disposée sur une surface d'enveloppe (206) de l'agencement de soupape.

11. Agencement d'injection de gaz combustible selon l'une quelconque des revendications précédentes, dans lequel la section saillante de guidage d'écoulement (204) est une section externe convexe (208) s'étendant sur une partie substantielle dans une direction axiale.

12. Agencement d'injection de gaz combustible selon l'une quelconque des revendications précédentes, dans lequel des parties de ladite section de guidage d'écoulement de capuchon de buse et de ladite section saillante de guidage d'écoulement sont agencées radialement en vis-à-vis l'une de l'autre.

13. Agencement d'injection de gaz combustible selon l'une quelconque des revendications précédentes, dans lequel l'agencement de soupape d'admission comprend une section de soupape (210) et une section de tête s'étendant axialement (212) ayant une extrémité supérieure (214) agencée au niveau de la section de soupape (210), et une extrémité inférieure (216) tournée à l'opposé de la section de soupape (210), la section de soupape (210) comprenant une surface (218) agencée en butée avec le siège de soupape (220) lorsque l'agencement de soupape d'admission prend la position fermée.

14. Agencement d'injection de gaz combustible selon l'une quelconque des revendications 19 à 21, dans lequel la section de tête (212) comprend une surface conique (230) entre la section saillante de guidage d'écoulement (208) et l'extrémité inférieure (216).

15. Agencement d'injection de gaz combustible selon l'une quelconque des revendications précédentes, dans lequel le capuchon de buse est une section extérieure de l'agencement d'injection de gaz combustible, ledit capuchon de buse étant configuré pour être fixé à un corps d'injecteur de l'agencement d'injection de gaz combustible.
